# EUROPEAN PATENT APPLICATION

(11) **EP 4 541 648 A1**
(43) Date of publication of application: **23.04.2025**
(21) Application number: 23822953.8
(22) Date of filing: 02.06.2023
(51) Int. Cl.: B60N 2/015, B60N 2/26

(54) **VEHICLE SEAT SECURING APPARATUS AND AUTOMOBILE**

(30) Priority: 16.06.2022 CN 202210695223
(71) Applicant: Zhejiang Geely Holding Group Co., Ltd., Hangzhou, Zhejiang 310051 (CN); Zhejiang Liankong Technologies Co., Ltd., Ningbo, Zhejiang 315336 (CN)
(72) Inventor: SU, Ruikang, Hangzhou Bay New District Ningbo, Zhejiang 315336 (CN); SONG, Yadong, Hangzhou Bay New District Ningbo, Zhejiang 315336 (CN); CHEN, Jinlong, Hangzhou Bay New District Ningbo, Zhejiang 315336 (CN); LI, Tianqi, Hangzhou Bay New District Ningbo, Zhejiang 315336 (CN); OU, Tianqiao, Hangzhou Bay New District Ningbo, Zhejiang 315336 (CN); LU, Chuanfei, Hangzhou Bay New District Ningbo, Zhejiang 315336 (CN)
(74) Representative: Zaboliene, Reda
(86) International application number: PCT/CN2023/098091
(87) International publication number: WO 2023/241384

(57) **Abstract**

Disclosed are a vehicle seat securing apparatus and an automobile. The vehicle seat securing apparatus comprises a base (10) and, disposed on the base, a rear-seat left mounting bracket (20), a child seat mounting part (30) and a rear-seat right mounting bracket (40); the rear-seat left mounting bracket and the rear-seat right mounting bracket are arranged at two ends of the base; the rear-seat left mounting bracket and the rear-seat right mounting bracket are each provided with rear seat mounting parts (21, 41), and the rear seat mounting parts are fixedly connected to a vehicle rear row seat; the rear-seat left mounting bracket and the rear-seat right mounting bracket are each provided with floor mounting parts (22, 42), and the floor mounting parts are fixedly connected to the floor of the vehicle. By providing the rear-seat left mounting bracket, the child seat mounting part and the rear-seat right mounting bracket on the base, the vehicle rear row seat and the child seat mounting position can be integrated, helping to reduce welding variables.

## Description

The patent document claims priority to Chinese patent application No. 202210695223.9, filed on June 16, 2022, and entitled "A vehicle seat securing apparatus and an automobile". The entire disclosure of the above-identified application is incorporated herein by reference.

### TECHNICAL FIELD

The present document relates to the technical field of automobiles, and in particular to a vehicle seat securing apparatus and an automobile.

### DESCRIPTION OF RELATED ART

In order to meet the diversified needs of the automobile-market, automobile companies introduce a wide variety of vehicle models including similar models. Due to different man-machine arrangements of similar models, welding positions for vehicle rear seat mounting brackets and the child seat mounting brackets are different.

### TECHNICAL ISSUES

In the prior art, the vehicle rear seat left mounting bracket, the vehicle rear seat right mounting bracket, the vehicle rear seat middle mounting bracket, and a plurality of child seat mounting brackets are welded to the rear floor upper crossbeam respectively, which leads to differences of rear floor upper crossbeam assemblies in similar models, and therefore it is necessary to differentiate the rear floor upper crossbeam assemblies during production in a workshop, but due to the rear floor upper crossbeam assemblies of the similar models have similar shapes and structures, it is easy to make mistakes due to misidentification in the production process; in addition, due to the structures of the rear floor upper crossbeam assemblies are different, it is necessary to invest in the corresponding molds, jigs, fixtures and other tooling equipment, which increases the cost.

### TECHNICAL SOLUTION

The present document provides a vehicle seat securing apparatus and an automobile, which is capable of realizing the integration of a rear seat and a child seat mounting position of a vehicle and is conducive to reducing welding variables by setting a rear seat left mounting bracket, a child seat mounting portion, and a rear seat right mounting bracket on a base.

On one hand, the present document provides a vehicle seat securing apparatus including a base, and a rear seat left mounting bracket, a child seat mounting portion and a rear seat right mounting bracket provided on the base;

The rear seat left mounting bracket and the rear seat right mounting bracket are provided at two ends of the base;

The rear seat left mounting bracket and the rear seat right mounting bracket are each provided with a rear seat mounting portion, the rear seat mounting portions are fixedly connected to a vehicle rear seat;

The rear seat left mounting bracket and the rear seat right mounting bracket are each provided with a floor mounting portion, the floor mounting portions are fixedly connected to a vehicle floor.

Preferably, the vehicle seat securing apparatus further includes an auxiliary mounting bracket provided on the base, the auxiliary mounting bracket is provided between the rear seat left mounting bracket and the rear seat right mounting bracket, and the auxiliary mounting bracket is fixedly connected to the vehicle floor.

Preferably, the rear seat left mounting bracket and the rear seat right mounting bracket are each provided with a rear seat positioning portion, the rear seat positioning portions are clearance-fitted with vehicle rear seat positioning portions;

The rear seat left mounting bracket and the rear seat right mounting bracket are each provided with a floor positioning portion, the floor positioning portions are clearance-fitted with vehicle floor positioning portions.

Preferably, the child seat mounting portion is provided between the rear seat left mounting bracket and the rear seat right mounting bracket.

Preferably, the child seat mounting portion includes a plurality of child seat mounting members, the plurality of the child seat mounting members are spaced apart along a length direction of the base.

Preferably, the auxiliary mounting bracket is provided with a pivot hole for matching a vehicle rear seat pivot axis, and the auxiliary mounting bracket is rotationally connected to the vehicle rear seat.

Preferably, the auxiliary mounting bracket is provided with a first auxiliary mounting portion and a second auxiliary mounting portion;

The first auxiliary mounting portion and the second auxiliary mounting portion are provided on different directional surfaces of the auxiliary mounting bracket;

The first auxiliary mounting portion and the second auxiliary mounting portion are fixedly connected to the vehicle floor respectively.

Preferably, the base is welded to the rear seat left mounting bracket, the child seat mounting portion and the rear seat right mounting bracket respectively.

Preferably, the vehicle seat securing apparatus is provided with a weight reducing structure.

On the other hand, the present document provides a vehicle including a vehicle seat securing apparatus as described in any one of the foregoing.

### BENEFICIAL EFFECT

The vehicle seat securing apparatus and the automobile provided by the present document have the following beneficial effects:

The present document sets the rear seat left mounting bracket, the child seat mounting portion and the rear seat right mounting bracket on the base, which can realize the integration of the rear seat and the child seat mounting position of the vehicle, which is conducive to the external supply of the vehicle seat securing apparatus, and reduces the welding variables in the assembly process of the whole vehicle plant.

### BRIEF DESCRIPTION OF THE DRAWINGS

In order to illustrate the technical solutions in the embodiments of the present document more clearly, the accompanying drawings to be used in the description of the embodiments will be briefly introduced below, and it is obvious that the accompanying drawings in the following description are only some embodiments of the present document, and for the person of ordinary skill in the art, other accompanying drawings can be obtained based on the accompanying drawings without creative work.
FIG. 1 shows a schematic structural diagram of a rear seat and a child seat mounting position of a vehicle of a prior art;
FIG. 2 shows a schematic structural diagram of a vehicle seat securing apparatus provided by an embodiment of the present document;
FIG. 3 shows a schematic structural diagram of a vehicle seat securing apparatus and a vehicle floor provided by an embodiment of the present document.

The following is a supplementary description of the accompanying drawings:
10-base; 20-rear seat left mounting bracket; 21-rear seat left mounting portion; 22-floor left mounting portion; 23-rear seat left positioning portion; 24-floor left positioning portion; 30-child seat mounting portion; 31-child seat mounting member; 40-rear seat right mounting bracket; 41-rear seat right mounting portion; 42-floor right mounting portion; 43-rear seat right positioning portion; 44-floor right positioning portion; 50-auxiliary mounting bracket; 51-pivot hole; 52-first auxiliary mounting portion; 53-second auxiliary mounting portion; 54-weight reducing structure; 60-vehicle rear seat left mounting bracket; 70-vehicle rear seat right mounting bracket; 80-vehicle rear seat middle mounting bracket; 90-rear floor upper crossbeam; 100-child seat mounting bracket; 101-child seat mounting hooks; 110-vehicle floor.

### DETAILED DESCRIPTION OF THE EMBODIMENTS

In order to enable those of ordinary skill in the art to better understand the embodiments of the present document, the technical solutions in the embodiments of the present document will be clearly and completely described below in conjunction with the accompanying drawings in the embodiments of the present document. Obviously, the described embodiments are only a part of the embodiments of the present document, and not all of the embodiments. Based on the embodiments in the present document, all other embodiments obtained by a person of ordinary skill in the art without creative work fall within the protection scope of the present document.

The term "an embodiment" or "embodiments" herein refers to specific features, structures, or characteristics that may be included in at least one solutions of the present document. In the description of the present document, it is to be understood that the terms "up", "down", "top", "bottom", etc., are indicative of an orientation or positional relationship based on that shown in the accompanying drawings, and are intended only to facilitate and simplify the description of the present document, and are not indicative or suggestive of the device or element referred to have a particular orientation, be constructed and operated in a particular orientation, and therefore are not to be construed as a limitation of the present document. Furthermore, the terms "first" and "second" are used only for descriptive purposes, and are not to be construed as indicating or implying relative importance or implicitly specifying the number of technical features indicated. Thus, a feature defined with the terms "first" and "second" may expressly or impliedly include one or more such features. Furthermore, the terms "first", "second", etc. are used to distinguish similar objects and need not be used to describe a particular order or sequence. It should be understood that the data so used may be interchanged, where appropriate, so that the embodiments of the present document described herein can be implemented in an order other than those illustrated or described herein.

In order to facilitate the illustration of the advantages of the vehicle seat securing apparatus of the embodiments of the present document, at the outset of the detailed description of the technical solutions of the embodiments of the present document, an overview of the relevant elements of the prior art is first provided:

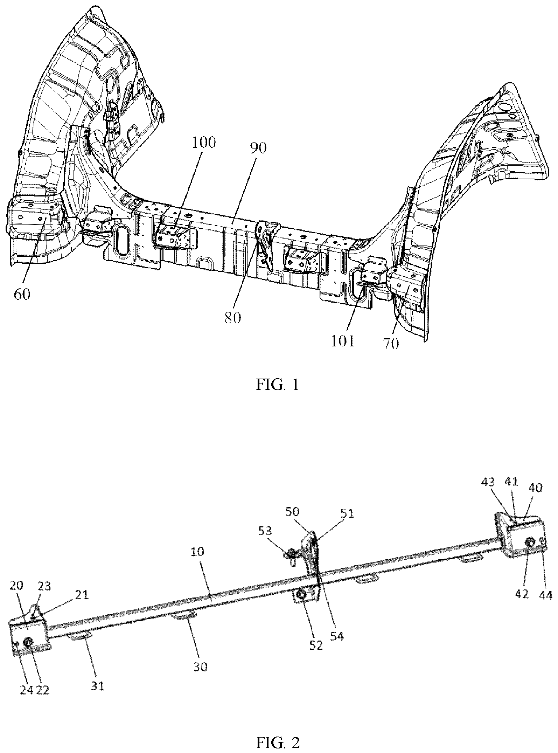

Referring to FIG. 1, FIG. 1 shows a schematic structural diagram of a vehicle rear seat and a child seat mounting position of a prior art, in which a vehicle rear seat left mounting bracket 60, a vehicle rear seat right mounting bracket 70, a vehicle rear seat middle mounting bracket 80, and a plurality of child seat mounting brackets 100 are welded to a rear floor upper crossbeam 90 respectively, and a child seat mounting hook 101 is welded to the child seat mounting bracket 100, due to minor differences in man-machine arrangements of similar models, there are also differences in the welding positions of the vehicle rear seat left mounting bracket 60, the vehicle rear seat right mounting bracket 70, the vehicle rear seat middle mounting bracket 80 and the plurality of child seat mounting brackets 100 on the rear floor upper crossbeam 90, which results in differences in rear floor upper crossbeam assemblies of similar models. Therefore, it is necessary to differentiate the rear floor upper crossbeam assemblies during workshop production, but due to the rear floor upper crossbeam assemblies of the similar models have similar shapes and structures, it is easy to make a mistake due to misidentification during production; furthermore, due to the structures of the rear floor upper crossbeam assemblies are different, it is necessary to invest in the corresponding molds, jigs, fixtures and other tooling equipment, respectively, which increases the cost.

In view of the deficiencies of the prior art, the vehicle seat securing apparatus of the present document is provided with a rear seat left mounting bracket, a child seat mounting portion, and a rear seat right mounting bracket on a base, which is capable of realizing the integration of the vehicle rear seat and the child seat mounting position, facilitating the external supply of the vehicle seat securing apparatus, and reducing the welding variables during the assembly process of the whole vehicle plant.

The technical solutions in the embodiments of the present document are described below in conjunction with the accompanying drawings.

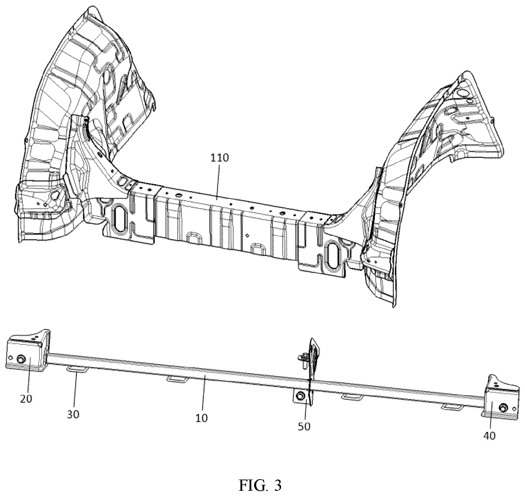

Referring to FIGS. 2 and 3, in the embodiment of the present document, the vehicle seat securing apparatus includes a base 10, and a rear seat left mounting bracket 20, a child seat mounting portion 30, and a rear seat right mounting bracket 40 disposed on the base 10; the rear seat left mounting bracket 20 and the rear seat right mounting bracket 40 are disposed at two ends of the base 10; the rear seat left mounting bracket 20 and the rear seat right mounting bracket 40 are each provided with a rear seat mounting portion, the rear seat mounting portions are fixedly connected to a vehicle rear seat; the rear seat left mounting bracket 20 and the rear seat right mounting bracket 40 are each provided with a floor mounting portion, and the floor mounting portions are fixedly connected to a vehicle floor.

In the embodiment of the present document, the base 10 includes a tubular base, specifically, the tubular base is a square tube base. The rear seat left mounting bracket 20 and the rear seat right mounting bracket 40 are provided at left and right ends of the base 10 along a length direction.

Specifically, the rear seat mounting portion includes a rear seat left mounting portion 21 disposed on the rear seat left mounting bracket 20, and a rear seat right mounting portion 41 disposed on the rear seat right mounting bracket 40, and the vehicle rear seat is provided with vehicle rear seat mounting portions that correspondingly match the rear seat left mounting portion 21 and the rear seat right mounting portion 41. In this manner, fasteners can be threaded into the rear seat mounting portions along a Z-direction of the vehicle to realize fixed connections between the rear seat mounting portions and the vehicle rear seat mounting portions.

Preferably, the floor mounting portion is screwed to a vehicle floor mounting portion.

Specifically, the floor mounting portions include a floor left mounting portion 22 disposed on the rear seat left mounting bracket 20, and a floor right mounting portion 42 disposed on the rear seat right mounting bracket 40, the vehicle floor 110 is provided with vehicle floor mounting portions correspondingly matched with the floor left mounting portion 22 and the floor right mounting portion 42, in this way, the fasteners can penetrate into the floor mounting portions along an X direction of the vehicle, to realize fixed connections between the floor mounting portions of the vehicle seat securing apparatus and the vehicle floor mounting portions.

Preferably, the floor mounting portion of the vehicle seat securing apparatus is screwed to the vehicle floor mounting portion.

The vehicle seat securing apparatus of the present document is provided with the rear seat left mounting bracket, the child seat mounting portion and the rear seat right mounting bracket on the base, which can realize the integration of the rear seat and the child seat mounting position of the vehicle, which is conducive to the external supply of the vehicle seat securing apparatus, and to reduce the welding variables and cost savings during the assembly process of the whole vehicle plant.

In the embodiment of the present document, the vehicle seat securing apparatus further includes an auxiliary mounting bracket 50 disposed on the base 10, the auxiliary mounting bracket 50 is disposed between the rear seat left mounting bracket 20 and the rear seat right mounting bracket 40, and the auxiliary mounting bracket 50 is fixedly connected to the vehicle floor 110.

Specifically, the auxiliary mounting bracket 50 and the base 10 are welded together, preferably by carbon dioxide shield welding.

In one embodiment, the auxiliary mounting bracket 50 is provided at a center position between the rear seat left mounting bracket 20 and the rear seat right mounting bracket 40, so as to realize a stable connection between the vehicle seat securing apparatus and the vehicle floor 110.

In the embodiment of the present document, the auxiliary mounting bracket 50 is provided with a pivot hole 51 for matching a vehicle rear seat pivot axis, and the auxiliary mounting bracket 50 is rotationally connected with the vehicle rear seat.

Specifically, the pivot hole 51 and the vehicle rear seat pivot axis are clearance-fitted, so that rotation of the vehicle rear seat can be realized.

In the embodiment of the present document, the auxiliary mounting bracket 50 is provided with a first auxiliary mounting portion 52 and a second auxiliary mounting portion 53; the first auxiliary mounting portion 52 and the second auxiliary mounting portion 53 are fixedly connected to the vehicle floor 110 respectively.

Specifically, the vehicle floor 110 is provided with a first vehicle floor mounting portion that matches the first auxiliary mounting portion 52, and a second vehicle floor mounting portion that matches the second auxiliary mounting portion 53; in this way, a fixed connection between the first auxiliary mounting portion 52 and the first vehicle floor mounting portion, and a fixed connection between the second auxiliary mounting portion 53 and the second vehicle floor mounting portion are realized.

Specifically, the first auxiliary mounting portion 52 is screwed to the first vehicle floor mounting portion and the second auxiliary mounting portion 53 is screwed to the second vehicle floor mounting portion.

Preferably, the first auxiliary mounting portion 52 and the second auxiliary mounting portion 53 are provided on different directional surfaces of the auxiliary mounting bracket 50.

In the embodiment of the present document, the first auxiliary mounting portion 52 and the second auxiliary mounting portion 53 are provided in different directions of the auxiliary mounting bracket 50, so as to realize a stable connection between the vehicle seat securing apparatus and the vehicle floor 110.

In one embodiment, the first auxiliary mounting portion 52 includes a first auxiliary mounting hole, an axis of the first auxiliary mounting hole is in a length direction of a vehicle body, and the second auxiliary mounting portion 53 includes a second auxiliary mounting hole, an axis of the second auxiliary mounting hole is in a height direction of the vehicle body.

In the embodiment of the present document, the rear seat left mounting bracket 20 and the rear seat right mounting bracket 40 are each provided with a rear seat positioning portion, the rear seat positioning portion clearance-fits with a vehicle rear seat positioning portion; and the rear seat left mounting bracket 20 and the rear seat right mounting bracket 40 are each provided with a floor positioning portion, the floor positioning portion clearance-fits with a vehicle floor positioning portion.

Specifically, the rear seat positioning portion includes a rear seat left positioning portion 23 disposed on the rear seat left mounting bracket 20, and a rear seat right positioning portion 43 disposed on the rear seat right mounting bracket 40; the rear seat left positioning portion 23 may be a first positioning pin hole, and the rear seat right positioning portion 43 may be a second positioning pin hole, and the vehicle rear seat is provided with vehicle rear seat positioning portions that match with the rear seat left positioning portion 23 and the rear seat right positioning portion 43 respectively, the vehicle rear seat positioning portions may be positioning pins, and the rear seat positioning portion and the vehicle rear seat positioning portion are clearance-fitted, so as to realize the positioning of the vehicle rear seat and facilitate the assembly of the vehicle rear seat.

Specifically, the floor positioning portion includes a floor left positioning portion 24 disposed on the rear seat left mounting bracket 20, and a floor right positioning portion 44 disposed on the rear seat right mounting bracket 40, the floor left positioning portion 24 may be a first positioning pin, the floor right positioning portion 44 may be a second positioning pin, and the vehicle floor 110 is provided with vehicle floor positioning portions that match with the floor left positioning portion 24 and the floor right positioning portion 44, the vehicle floor positioning portions may be positioning pin holes, and the vehicle floor positioning portion of the vehicle seat securing apparatus and the vehicle floor positioning portion are clearance-fitted, so as to realize the positioning of the vehicle seat securing apparatus, and facilitate the assembly of the vehicle seat securing apparatus.

In the embodiment of the present document, the child seat mounting portion 30 is provided between the rear seat left mounting bracket 20 and the rear seat right mounting bracket 40.

In the embodiment of the present document, the child seat mounting portion 30 includes a plurality of child seat mounting members 31, the plurality of child seat mounting members 31 are spaced apart along a length direction of the base 10.

Specifically, the child seat mounting members 31 include U-shaped hooks, so that the child seat fixing straps can be easily penetrated through the U-shaped hooks for easy installation and fixing of the child seat.

In one embodiment, the child seat mounting portion 30 includes four child seat mounting members 31, the four child seat mounting members 31 are spaced apart along the length direction of the base 10.

In another embodiment, the child seat mounting portion 30 includes two child seat mounting members 31, the two child seat mounting members 31 are disposed between the rear seat left mounting bracket 20 and the auxiliary mounting bracket 50 and spaced apart along the length direction of the base 10.

In another embodiment, the child seat mounting portion 30 includes two child seat mounting members 31, the two child seat mounting members 31 are disposed between the rear seat right mounting bracket 40 and the auxiliary mounting bracket 50 and spaced apart along the length direction of the base 10.

In the embodiment of the present document, the base 10 is welded to the rear seat left mounting bracket 20, the child seat mounting portion 30 and the rear seat right mounting bracket 40, respectively, preferably by carbon dioxide shield welding, so as to provide the rear seat mounting portion and the floor mounting portion with higher strength.

In an embodiment of the present document, the vehicle seat securing apparatus is provided with a weight reducing structure 54.

In one embodiment, the auxiliary mounting bracket 50 is provided with the weight reducing structure 54, the weight reducing structure 54 includes a weight-reducing through-hole, and specifically, the weight-reducing through-hole is disposed on a side of the pivot hole 51, so as to be able to decrease the weight and the cost of the vehicle seat securing apparatus.

Table 1 shows the CAE analysis of diagonal pulling the vehicle seat securing apparatus of the embodiment of the present document, and Table 2 shows the CAE analysis of positive pulling the vehicle seat securing apparatus of the embodiment of the present document. The CAE analysis of the positive pull and the diagonal pull show that the vehicle seat securing apparatus in the embodiment of the present document can satisfy the requirements of the child seat mounting portion of the child seat in diagonal pull and positive pull, while reducing the welding variables.

Diagonal pull test: constraining the degrees of freedom at the boundary of the body-in-white, applying a load of 5000N to a static loading device by a tension cable, with the direction of a load applied at 0° from the horizontal plane and at an angle of 75° from a longitudinal symmetrical plane of the vehicle, and with the amount of plastic deformation of the rear seat left mounting bracket being less than or equal to 4%, and that of the rear seat right mounting bracket being less than or equal to 4%, and the amount of plastic deformation of the auxiliary mounting bracket being less than or equal to 3%.

Positive pull test: constraining the degrees of freedom at the boundary of the body-in-white, and applying a load of 8000N to the static loading device by a tension cable, with the direction of the load applied at 10° from the horizontal plane, and at an angle of 0° from the longitudinal symmetrical plane of the vehicle, with the amount of plastic deformation of the rear left mounting bracket being less than or equal to 1%, and that of the rear right mounting bracket being less than or equal to 1%, and the amount of plastic deformation of the auxiliary mounting bracket being less than or equal to 1%.

### [Table 1]

**Table 1**

| Test item | Unit | Test Value | Target value |
|---|---|---|---|
| Displacement of rear seat left mounting bracket | mm | 116 | 125 |
| Displacement of rear seat right mounting bracket | mm | 112 | 125 |
| Plastic deformation of rear seat left mounting bracket | - | 4% | 13% |
| Plastic deformation of rear seat right mounting bracket | - | 4% | 13% |
| Plastic deformation of auxiliary mounting bracket | - | 3% | 18% |
| Plastic deformation of the base | - | 6% | 21% |
| Plastic deformation of child seat mounting portion | - | 15% | 24% |
| Strain around a welded joint | - | 0.01 | 0.8 |

### [Table 2]

**Table 2**

| Test item | Unit | Test Value | Target value |
|---|---|---|---|
| Displacement of rear seat left mounting bracket | mm | 102 | 125 |
| Displacement of rear seat right mounting bracket | mm | 102 | 125 |
| Plastic deformation of rear seat left mounting bracket | - | 1% | 13% |
| Plastic deformation of rear seat right mounting bracket | - | 1% | 13% |
| Plastic deformation of auxiliary mounting bracket | - | 1% | 18% |
| Plastic deformation of the base | - | 2% | 21% |
| Plastic deformation of child seat mounting portion | - | 5% | 24% |
| Strain around a welded joint | - | 0.01 | 0.8 |

Furthermore, embodiments of the present document further provide a vehicle including a vehicle seat securing apparatus as described above.

The vehicle seat securing apparatus of the present document sets the rear seat left mounting bracket, the child seat mounting portion and the rear seat right mounting bracket on the base, which can realize the integration of the rear seat and the child seat mounting position of the vehicle, which is conducive to the external supply of the vehicle seat securing apparatus, and reduces the welding variables during the assembly process of the whole vehicle plant.

In addition, the vehicle seat securing apparatus of the present document reduces the number of sheet metal parts and development costs, reduces the number of assembly stations, and improves production efficiency.

Specific embodiments of the present document are described below based on the above technical solutions.

### Embodiment 1

Referring to FIGS. 2 and 3, Embodiment 1 provides a vehicle seat securing apparatus including a base 10, and a rear seat left mounting bracket 20, a child seat mounting portion 30, and a rear seat right mounting bracket 40 disposed on the base 10; the rear seat left mounting bracket 20 and the rear seat right mounting bracket 40 are disposed at two ends of the base 10; the rear seat left mounting bracket 20 and the rear seat right mounting bracket 40 are each provided with a rear seat mounting portion, the rear seat mounting portions are fixedly connected to a vehicle rear seat; the rear seat left mounting bracket 20 and the rear seat right mounting bracket 40 are each provided with a floor mounting portion, the floor mounting portions are fixedly connected to a vehicle floor.

Specifically, the base 10 is a square tube base, and the rear seat left mounting bracket 20 and the rear seat right mounting bracket 40 are provided at left and right ends of the square tube base along a length direction.

Furthermore, the rear seat left mounting bracket 20 is provided with a rear seat left mounting hole, the rear seat right mounting bracket 40 is provided with a rear seat right mounting hole, and the vehicle rear seat is provided with vehicle rear seat mounting portions that correspondingly match with the rear seat left mounting hole and the rear seat right mounting hole, so as to realize fixed connections between the rear seat mounting portions and the vehicle rear seat mounting portions by bolts.

Furthermore, the rear seat left mounting bracket 20 is provided with a floor left mounting hole, the rear seat right mounting bracket 40 is provided with a floor right mounting hole, and the vehicle floor 110 is provided with vehicle floor mounting portions that correspondingly match the floor left mounting hole and the floor right mounting hole, and in this way, fixed connections between the floor mounting portions of the vehicle seat securing apparatus and the vehicle floor mounting portions are realized by bolts.

Furthermore, the vehicle seat securing apparatus further includes an auxiliary mounting bracket 50 provided on the base 10, the auxiliary mounting bracket 50 is provided between the rear seat left mounting bracket 20 and the rear seat right mounting bracket 40.

Specifically, the auxiliary mounting bracket 50 is provided at a center position between the rear seat left mounting bracket 20 and the rear seat right mounting bracket 40.

Specifically, the auxiliary mounting bracket 50 and the base 10 are welded together by carbon dioxide shield welding.

Furthermore, the auxiliary mounting bracket 50 is provided with a pivot hole 51 for matching a vehicle rear seat pivot axis, and the pivot hole 51 is rotationally connected to the vehicle rear seat.

Furthermore, the auxiliary mounting bracket 50 is provided with a first auxiliary mounting hole and a second auxiliary mounting hole; the first auxiliary mounting hole and the second auxiliary mounting hole are fixedly connected to the vehicle floor 110 by bolts, respectively.

Specifically, the first auxiliary mounting hole and the second auxiliary mounting hole are provided in different directional surfaces of the auxiliary mounting bracket 50. In this way, a stable connection between the vehicle seat securing apparatus and the vehicle floor 110 can be realized.

Meanwhile, the rear seat left mounting bracket 20 is provided with a first positioning pin hole, the rear seat right mounting bracket 40 is provided with a second positioning pin hole, and the vehicle rear seat is provided with vehicle rear seat positioning portions that are clearance-fitted with the first positioning pin hole and the second positioning pin hole respectively, and the vehicle rear seat positioning portions are positioning pins, so as to realize the positioning of the vehicle rear seat and facilitate the assembly of the vehicle rear seat.

Meanwhile, the rear seat left mounting bracket 20 is provided with a first positioning pin, the rear seat right mounting bracket 40 is provided with a second positioning pin, and the vehicle floor 110 is provided with vehicle floor positioning portions that are clearance-fitted with the first positioning pin and the second positioning pin respectively, the vehicle floor positioning portions are positioning pin holes, and in this way, the positioning of the vehicle seat securing apparatus is realized to facilitate the assembly of the vehicle seat securing apparatus.

Furthermore, the child seat mounting portion 30 includes four U-shaped hooks, the four U-shaped hooks are spaced apart along the length direction of the base 10. In this way, the child seat fixing straps can easily penetrate through the U-shaped hooks, facilitating the installation and the fixing of the child seat.

Furthermore, the base 10 is welded to the rear seat left mounting bracket 20, the child seat mounting portion 30, and the rear seat right mounting bracket 40 respectively through carbon dioxide shield welding, so that the rear seat mounting portion and the floor mounting portion can be provided with higher strength.

Furthermore, the auxiliary mounting bracket 50 is provided with a weight-reducing through-hole, specifically, the weight-reducing through-hole is provided at a side of the pivot hole 51. In this way, the weight and cost of the vehicle seat securing apparatus can be decreased.

The vehicle seat securing apparatus provided in Example 1 sets the rear seat left mounting bracket, the child seat mounting portion, and the rear seat right mounting bracket on the base, which is capable of realizing the integration of the rear seat and the child seat mounting position of the vehicle, and is conducive to the reduction of welding variables.

### Embodiment 2

Referring to FIGS. 2 and 3, Example 1 provides a vehicle seat securing apparatus including a base 10, and a rear seat left mounting bracket 20, a child seat mounting portion 30, and a rear seat right mounting bracket 40 disposed on the base 10; the rear seat left mounting bracket 20 and the rear seat right mounting bracket 40 are disposed at two ends of the base 10; the rear seat left mounting bracket 20 and the rear seat right mounting bracket 40 are each provided with a rear seat mounting portion, the rear seat mounting portions are fixedly connected to a vehicle rear seat; the rear seat left mounting bracket 20 and the rear seat right mounting bracket 40 are each provided with a floor mounting portion, the floor mounting portions are fixedly connected to a vehicle floor.

Specifically, the base 10 is a square tube base, and the rear seat left mounting bracket 20 and the rear seat right mounting bracket 40 are provided at left and right ends of the square tube base along a length direction.

Furthermore, the rear seat left mounting bracket 20 is provided with a rear seat left mounting hole, the rear seat right mounting bracket 40 is provided with a rear seat right mounting hole, and the vehicle rear seat is provided with vehicle rear seat mounting portions that match with the rear seat left mounting hole and the rear seat right mounting hole respectively, so that fixed connections between the rear seat mounting portions and the vehicle rear seat mounting portions are realized by bolts.

Furthermore, the rear seat left mounting bracket 20 is provided with a floor left mounting hole, the rear seat right mounting bracket 40 is provided with a floor right mounting hole, and the vehicle floor 110 is provided with vehicle floor mounting portions that match the floor left mounting hole and the floor right mounting hole respectively, so that fixed connections between the floor mounting portions in the vehicle seat securing apparatus and the vehicle floor mounting portions are realized by bolts.

Furthermore, the vehicle seat securing apparatus further includes an auxiliary mounting bracket 50 provided on the base 10, the auxiliary mounting bracket 50 is provided between the rear seat left mounting bracket 20 and the rear seat right mounting bracket 40.

Specifically, the auxiliary mounting bracket 50 is provided at a center position between the rear seat left mounting bracket 20 and the rear seat right mounting bracket 40.

Specifically, the auxiliary mounting bracket 50 and the base 10 are welded together by carbon dioxide shield welding.

Furthermore, the auxiliary mounting bracket 50 is provided with a pivot hole 51 for matching a vehicle rear seat pivot axis, and the pivot hole 51 is rotationally connected to the vehicle rear seat.

Furthermore, the auxiliary mounting bracket 50 is provided with a first auxiliary mounting hole and a second auxiliary mounting hole; the first auxiliary mounting hole and the second auxiliary mounting hole are fixedly connected to the vehicle floor 110 by bolts, respectively.

Specifically, the first auxiliary mounting holes and the second auxiliary mounting holes are provided in different directional surfaces of the auxiliary mounting bracket 50. In this way, a stable connection between the vehicle seat securing apparatus and the vehicle floor 110 can be realized.

Meanwhile, the rear seat left mounting bracket 20 is provided with a first positioning pin hole, the rear seat right mounting bracket 40 is provided with a second positioning pin hole, and the vehicle rear seat is provided with vehicle rear seat positioning portions that are clearance-fitted with the first positioning pin hole and the second positioning pin hole respectively, and the vehicle rear seat positioning portions are positioning pins, so as to realize the positioning of the vehicle rear seat and facilitate the assembly of the vehicle rear seat.

Meanwhile, the rear seat left mounting bracket 20 is provided with a first positioning pin, the rear seat right mounting bracket 40 is provided with a second positioning pin, and the vehicle floor 110 is provided with vehicle floor positioning portions that clearance-fit with the first positioning pin and the second positioning pin respectively, and the vehicle floor positioning portions are positioning pin holes, in this way, the positioning of the vehicle seat securing apparatus is realized to facilitate the assembly of the vehicle seat securing apparatus.

Furthermore, the child seat mounting portion 30 includes two U-shaped hooks, the two U-shaped hooks are disposed between the rear seat left mounting bracket 20 and the auxiliary mounting bracket 50, and spaced apart along the length direction of the base 10. In this way, the child seat fixing straps can easily penetrate through the U-shaped hooks, facilitating the installation and fixing of the child seat.

Furthermore, the base 10 is welded to the rear seat left mounting bracket 20, the child seat mounting portion 30 and the rear seat right mounting bracket 40 respectively through carbon dioxide shield welding, so that the rear seat mounting portion and the floor mounting portion can be provided with higher strength.

The vehicle seat securing apparatus provided in Example 2 sets the rear seat left mounting bracket, the child seat mounting portion, and the rear seat right mounting bracket on the base, which can realize the integration of the vehicle rear seat and the child seat mounting position, and is conducive to reducing welding variables.

### Embodiment 3

The difference between Embodiment 3 and Embodiment 2 lies in the setting of the child seat mounting portion 30, the similarities with Embodiment 2 will not be repeated herein, and the differences between Embodiment 3 and Embodiment 2 are now described as follows:

Specifically, the child seat mounting portion 30 includes two U-shaped hooks, and the two U-shaped hooks are disposed between the rear seat right mounting bracket 40 and the auxiliary mounting bracket 50, and spaced apart along the length direction of the base 10. In this way, the child seat fixing straps can easily penetrate through the U-shaped hooks, facilitating the installation and fixing of the child seat.

The vehicle seat securing apparatus provided in Example 3 sets the rear seat left mounting bracket, the child seat mounting portion, and the rear seat right mounting bracket on the base, which is capable of realizing the integration of the vehicle rear seat and the child seat mounting position, and is conducive to the reduction of welding variables.

The above is only a preferred embodiment of the present document and is not intended to limit the present document, and any modifications, equivalent replacements, improvements, etc. made within the spirit and principles of the present document shall be included in the protection scope of the present document.

## Claims

1. A vehicle seat securing apparatus, **characterized in that** comprising a base (10), and a rear seat left mounting bracket (20), a child seat mounting portion (30) and a rear seat right mounting bracket (40) provided on the base (10);
the rear seat left mounting bracket (20) and the rear seat right mounting bracket (40) being provided at two ends of the base (10);
the rear seat left mounting bracket (20) and the rear seat right mounting bracket (40) being each provided with a rear seat mounting portion, the rear seat mounting portions being fixedly connected to a vehicle rear seat;
the rear seat left mounting bracket (20) and the rear seat right mounting bracket (40) being each provided with a floor mounting portion, the floor mounting portions being fixedly connected to a vehicle floor.

2. The vehicle seat securing apparatus according to claim **1,** wherein further comprises an auxiliary mounting bracket (50) provided on the base (10), the auxiliary mounting bracket (50) is provided between the rear seat left mounting bracket (20) and the rear seat right mounting bracket (40), and the auxiliary mounting bracket (50) is fixedly connected to the vehicle floor.

3. The vehicle seat securing apparatus according to claim **1,** wherein the rear seat left mounting bracket (20) and the rear seat right mounting bracket (40) are each provided with a rear seat positioning portion, and the rear seat positioning portions are clearance-fitted with vehicle rear seat positioning portions;
the rear seat left mounting bracket (20) and the rear seat right mounting bracket (40) are each provided with a floor positioning portion, the floor positioning portions are clearance-fitted with vehicle floor positioning portions.

4. The vehicle seat securing apparatus according to claim **1,** wherein the child seat mounting portion (30) is provided between the rear seat left mounting bracket (20) and the rear seat right mounting bracket (40).

5. The vehicle seat securing apparatus according to claim **1,** wherein the child seat mounting portion (30) comprises a plurality of child seat mounting members (31), the plurality of the child seat mounting members (31) are spaced apart along a length direction of the base (10).

6. The vehicle seat securing apparatus according to claim **2,** wherein the auxiliary mounting bracket (50) is provided with a pivot hole (51) for matching a vehicle rear seat pivot axis, and the auxiliary mounting bracket (50) is rotationally connected to the vehicle rear seat.

7. The vehicle seat securing apparatus according to claim **2,** wherein the auxiliary mounting bracket (50) is provided with a first auxiliary mounting portion (52) and a second auxiliary mounting portion (53);
the first auxiliary mounting portion (52) and the second auxiliary mounting portion (53) are provided on different directional surfaces of the auxiliary mounting bracket (50);
the first auxiliary mounting portion (52) and the second auxiliary mounting portion (53) are fixedly connected to the vehicle floor respectively.

8. The vehicle seat securing apparatus according to claim **1,** wherein the base (10) is welded to the rear seat left mounting bracket (20), the child seat mounting portion (30) and the rear seat right mounting bracket (40) respectively.

9. The vehicle seat securing apparatus according to claim **1,** wherein the vehicle seat securing apparatus is provided with a weight reducing structure (54).

10. An automobile vehicle **characterized in that** comprising the vehicle seat securing apparatus according to any one of claims **1-9.**
